# EUROPEAN PATENT SPECIFICATION

(11) **EP 2 657 720 B1**
(45) Date of publication and mention of the grant of the patent: **14.09.2016**
(21) Application number: 13165386.7
(22) Date of filing: 25.04.2013
(51) Int. Cl.: G01S 7/10, G01S 7/06, G01S 13/93

(54) **Device and method for displaying information**
Vorrichtung und Verfahren zum Anzeigen von Informationen
Dispositif et procédé d'affichage d'informations

(30) Priority: 27.04.2012 JP 2012103656
(43) Date of publication of application: 30.10.2013
(73) Proprietor: FURUNO ELECTRIC CO., LTD., Nishinomiya-City, Hyogo 662-8580 (JP)
(72) Inventor: Kubota, Yugo, Nishinomiya-City, Hyogo 662-8580 (JP); Maeno, Hitoshi, Nishinomiya-City, Hyogo 662-8580 (JP); Imasaka, Masashi, Nishinomiya-City, Hyogo 662-8580 (JP)
(74) Representative: Müller Hoffmann & Partner

(56) References cited:
- WO-A2-2007/110583
- US-A- 5 337 057
- US-A- 6 084 565
- US-A1- 2008 100 503

## Description

### Technical Field

The present invention generally relates to an information display device which is set with two display ranges.

### Background of the Invention

Conventionally, ship radar apparatuses have been known. For example, JP1996-105954A discloses a ship radar apparatus having a configuration with which an image (radar image) showing target objects around a ship can be displayed, and a scale of the radar image can be changed. When the scale is enlarged, although only a radar image for a narrow range near the ship is displayed, a detailed position and shape of an echo indicating the target object can be grasped. On the other hand, when the scale is reduced, although a radar image for a wide range can be displayed, the detailed position and shape of the echo indicating the target object is difficult to be grasped.

Therefore, with the ship radar apparatus having the above configuration, it is required to change the scale according to the situation. This is not limited to the ship radar apparatus, and is similar to ground-based radar apparatuses and vehicle navigation devices, etc.

Moreover, while the configuration disclosed in JP1996-105954A requires the change of the scale according to the situation, JP 1997-229710A discloses a ship navigation device that can automatically change the scale. The ship navigation device can set a route. The set route and the position of the ship are displayed on a display screen provided to the ship navigation device. When the ship moves away from the set route, the scale is automatically reduced. In this manner, the ship and the route can be displayed on the display screen constantly without manually changing the scale.

However, with the configuration of JP1997-229710A, although the manual change of the scale is not needed when the ship is off the route, in order to refer to a detailed nautical chart of the range near the ship for example, the scale needs to be changed manually. Further, in the state where the scale is enlarged, it may not be able to refer to the set route and/or a port far from the ship, etc. Therefore, even with the configuration of JP1997-229710A, the scale may need to be changed frequently.

US-A-5,337,057 discloses a non-linear radar range scale display arrangement wherein close-in targets are displayed in detail, while more distant targets are only discernable.

### Summary of the Invention

The present invention is made in view of the above situation, and it provides an information display device for simultaneously displaying detailed information of a range near a predetermined location (e.g., a position of a movable body), and information of a range far from the location.

According to an aspect of the invention an information display device including the features of claim 1 is provided.

The device includes a display unit for displaying, on a display screen, a first range and a second range having a display reference position same as that of the first range and being adjacent to the first range in a display area. The device also includes a controller for setting different scales for the first range and the second range and for performing a control to display perimeter information of the device in the display area having the first and second ranges to correspond to a position of the perimeter information.

In this manner, since the scales are different between the first and second ranges, within a range with a larger scale, a detailed position of the perimeter information about a small area can be displayed, and within a range with a smaller scale, a broad position corresponding to the perimeter information about a large area can be displayed. Therefore, the perimeter information can be displayed in a form suitable for a utility form of a user. Additionally, required information can be displayed without frequently changing the scale.

The first range may be a circular range centering on a predetermined position, and the second range may be externally adjacent to the first range.

In this manner, since the first range is a circular range, positions having the same distance but different azimuths from the predetermined position form the first range. Therefore, detection can be preformed while differentiating the priority of the perimeter of the predetermined position from other positions.

The predetermined position may be a position of the device.

In this manner, detection can be preformed while differentiating the priority of the perimeter of the device from the other positions.

The scales of the first and second ranges may be fixed, respectively.

In this manner, since the scales are fixed, the position corresponding to the perimeter information can instinctively be grasped.

The scale of the first range may be larger than the scale of the second range.

In this manner, for example, the perimeter information of the area far from a display reference position can be displayed at some standard level while displaying the perimeter information of the area close to the display reference position in detail.

The scale of the first range may be fixed. The scale of the second range may be set smaller as it locates more distant from the display reference position.

In this manner, since the scale becomes smaller as it locates more distant from the display reference position, even when the perimeter information corresponds to a position quite far from the display reference position, a broad position can be displayed.

The perimeter information may include information of which a displayed size changes according to the scale, and when this information is displayed within the second range, the information may be displayed in an enlarged manner.

In this manner, when displaying this kind of perimeter information (i.e. radar echoes and map) within the range having the small scale, it can be prevented that the user cannot recognize the perimeter information because it is displayed too small.

The controller may determine whether to display the perimeter information within the first and second ranges based on a predetermined display condition.

In this manner, by setting the display condition to display only the required perimeter information for the user, the number of display targets to be displayed can be reduced, and the display can be easier to be recognized.

The controller may set different display modes of at least one of the perimeter information, a line indicating a distance from the device or the center of the display screen, and a range outline frame, between the first and second ranges.

In this manner, the user can visually and instantly distinguish the first and second ranges from each other on the display screen.

A border between the first and second ranges may be changeable.

In this manner, the perimeter information can be displayed in a form suitable for the utility form of the user.

The device may be equipped in a movable body. The perimeter information is of the movable body.

In this manner, since the perimeter information of the movable body can be displayed with at least two kinds of scales, the user can move the movable body without frequently changing the scale. For example, a broad position of a destination can be grasped while enlarging the scale of the first range to grasp a detailed position of other movable bodies existing near the movable body.

The perimeter information displayed within the first range may include a map. The perimeter information displayed within the second range may include at least one of one or more other movable bodies, a landmark serving as a reference mark used when the movable body is in move, and a position registered by a user, and the perimeter information may be displayed by a mark.

In this manner, while displaying the map in the center of the display screen, various marks can be displayed therearound. Therefore, the user can move the movable body while constantly referring to broad positions of landmarks, etc.

The perimeter information displayed within the second range may further include a map.

In this manner, the information exists on the map can be displayed within the second range. Therefore, even a position far from the display reference position can be displayed with detailed information.

The device may be connected with a radar antenna. Radar echoes acquired from the radar antenna may be displayed within the first and second ranges.

In this manner, detailed radar echoes are displayed for an area with high priority (e.g., near the device), and radar echoes from a wide area are displayed for an area with low priority in a compressed form in a distance direction. Therefore, required information can be displayed in a form based on the priority without frequently changing the scale.

According to another aspect of the invention, a method of displaying information including the features of claim 14 is provided. The method includes acquiring perimeter information of a device, and setting different scales for a first range arranged on a display screen of a display unit and a second range having a display reference position same as that of the first range and being adjacent to the first range in a display area. The method also includes displaying the perimeter information in the display area having the first and second ranges to correspond to a position of the perimeter information.

In this manner, perimeter information can be displayed in a form suitable for a utility form of a user. Further, required information can be displayed without frequently changing the scale.

### Brief Description of the Drawings

The present disclosure is illustrated by way of example and not by way of limitation in the figures of the accompanying drawings, in which the like reference numeral indicate like elements and in which:
Fig. 1 is a block diagram of a radar apparatus according to one embodiment of the invention;
Figs. 2A and 2B are a view and a table showing one example of a display screen displayed on a display unit, respectively;
Figs. 3A and 3B are a view and a table showing a display screen when the display contents are changed, respectively;
Figs. 4A to 4C are tables showing examples of display conditions, respectively;
Figs. 5A and 5B are a view and a table showing a display screen displayed on the display unit according to a first modification, respectively;
Figs. 6A and 6B are a view and a table showing a display screen displayed on the display unit according to a second modification representing background art, respectively; and
Fig. 7 is a view showing a display screen displayed on the display unit in a case where the present invention is applied to a fish finder.

### Detailed Description

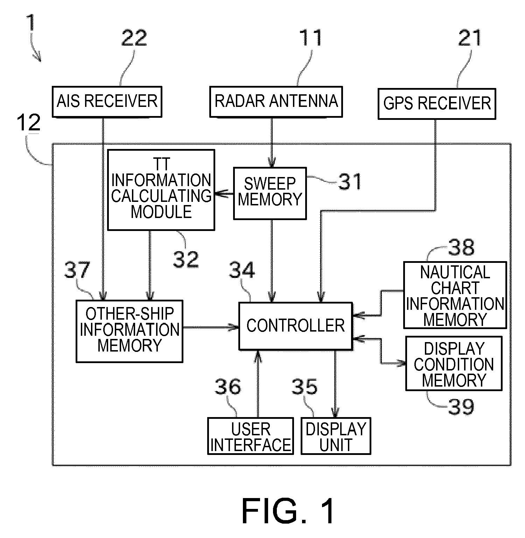

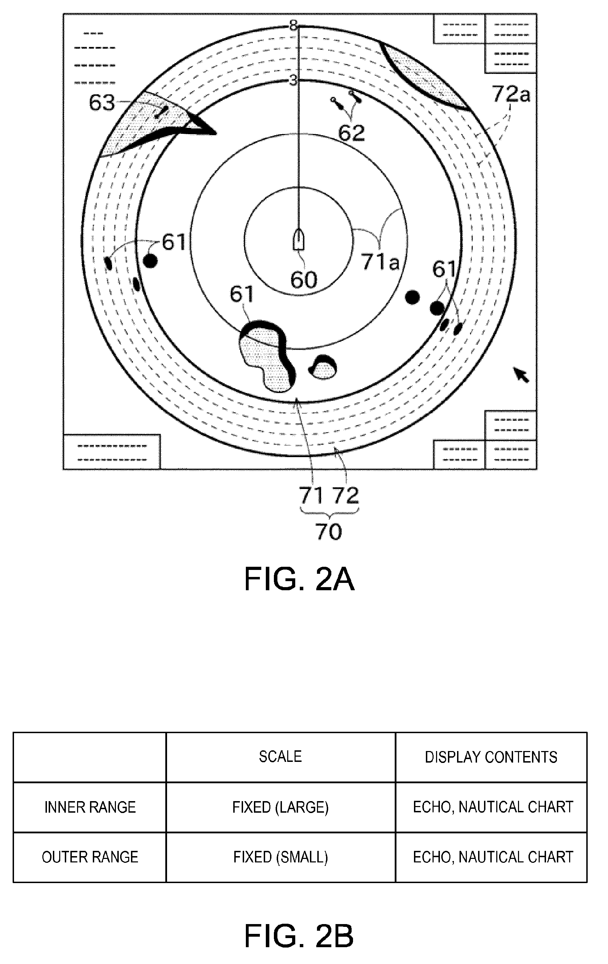

Next, embodiments of the present invention is described with reference to the appended drawings. Fig. 1 is a block diagram of a radar apparatus 1 according to one embodiment of the invention. Figs. 2A and 2B are a view and a table showing one example of a display screen displayed on a display unit 35, respectively.

As shown in Fig. 1, the ship radar apparatus 1 of one embodiment includes a radar antenna 11 and a radar indicator 12 (information display device).

The ship radar apparatus 1 is configured as a pulse radar apparatus. The radar antenna 11 is configured to transmit pulse-shaped radio waves having strong directivity, and receive reflection waves (reception signals, echoes) which are the pulse-shaped radio waves reflected on one or more target objects and returned back. Moreover, the radar antenna 11 is configured to repeatedly perform transceptions of the radio waves while rotating in the horizontal surface. With this configuration, scanning over 360° in the horizontal surface centering on a ship (hereinafter, may be referred to as "the ship concerned" or simply "the ship") can be performed.

Note that, instead of such a pulse radar, a CW radar (Continuous Wave radar) or a pulse Doppler radar may be used. Alternatively, a radar apparatus having a configuration that does not require the radar antenna to rotate may be used, for example, a radar apparatus having a configuration provided with antenna elements in the entire circumferential direction, or a radar apparatus for detecting only a specific direction, such as the forward direction only.

Each of the signals received by the radar antenna 11 is converted into digital data by A/D conversion using a reception circuit (not illustrated), and is outputted to the radar indicator 12.

The radar indicator 12 includes a sweep memory 31, a TT information calculating module 32, a controller 34, a display unit 35, a user interface 36, an other-ship information memory 37, a nautical chart information memory 38, and a display condition memory 39. Moreover, the radar indicator 12 includes a GPS receiver 21 and an AIS receiver 22, in addition to the radar antenna 11.

The data outputted from the radar antenna 11 is inputted to the sweep memory 31. The sweep memory 31 can store data obtained in one rotation (360°) of the radar antenna 11. Since this data is obtained by scanning for 360° centering on the ship in the horizontal surface, a two-dimensional image (radar image) showing a status of one or more target objects around the ship (relative positions of the one or more target objects with respect to the ship).

The controller 34 has, as its main components, a CPU or other processor for executing various programs, and a non-volatile memory such as Read Only Memory (ROM) where, for example, a program for displaying the radar image to be displayed on the display unit 35 is stored.

The display unit 35 is configured with, for example, a liquid crystal display, and can display the radar image created by the controller 34 on a display screen. As shown in Fig. 2A, the radar image is constituted with echoes 61 indicating shapes of ships and islands.

Additionally, the display unit 35 has a circular display area 70 as shown in Fig. 2A. A ship symbol 60 indicating a position of the ship is displayed in the center of the display area 70. The controller 34 performs a control of displaying, within the display area 70, information around the ship (perimeter information), specifically, the radar image, a nautical chart (map), and TT information and AIS information (described later), and the like.

Moreover, the display area 70 is formed with a first range 71 (inner range), and a second range 72 (outer range) externally adjacent to the first range 71 (arranged to externally surround the first range 71). In the example of Fig. 2A, the first range 71 is a circular range of which a radius is 3km centering on the ship position, and a range ring 71a is displayed every 1km from the ship position. The range ring 71a indicates a distance from the ship or the position corresponding to the center of the display screen. Additionally, the scale of the first range 71 is fixed.

The second range 72 is an annular range between 3km and 8km centering on the ship position, and a range ring 72a is displayed every 1km from the ship position within the range. In other words, the first and second ranges 71 and 72 have the same display reference position, and each of the ranges is determined based on the distance from the display reference position. In this embodiment, the display reference position is the ship position. Note that, the display reference position is not limited to the ship position, and may be the position corresponding to the center of the display screen, etc. The scale of the second range 72 is fixed; however, it is smaller than that of the first range 71, and therefore, an interval between the adjacent range rings 72a is narrower than that between the adjacent range rings 71a. With this configuration, information on a range far from the ship can be displayed to some extent while displaying the detailed situation near the ship.

Moreover, in this embodiment, the shape (frame) of the second range 72 is drawn by a thick solid line so that the border between the first and second ranges 71 and 72 is visually obvious. Additionally, the range ring 71 a is drawn by a normal solid line and the range ring 72a is drawn by a broken line, and thus, the range can easily be distinguished between the first and second ranges 71 and 72 also by the range rings. In this manner, a user can visually and instantly distinguish the respective first and second ranges 71 and 72 from each other.

The TT information calculating module 32 achieves a TT (Target Tracking) function. Although the detailed description of the TT (or ARPA) function is omitted since it is already known, the TT information calculating module 32 estimates a speed vector by automatically detecting and capturing the position of each target object based on the data stored in the sweep memory 31, and then tracking the movement of the target object based on time transition. Note that, the information on the target object obtained by the TT is information relative to the ship. Therefore, the TT information calculating module 32 can calculate information on the target object, such as the relative position of the target object (the distance of the target object from the ship and the azimuth with respect to the ship), and a speed of the target object relative to the ship. The TT information calculated by the TT information calculating module 32 is outputted to the other-ship information memory 37.

Further, the ship radar apparatus 1 is connected with the AIS receiver 22. The AIS receiver 22 receives AIS information (AIS signal) outputted from an AIS (Automatic Identification System) equipped on another ship The AIS signal contains information on the other ship, such as position, velocity, and course thereof. The information on the other ship contained in the AIS signal is terrestrial reference absolute information. Note that, in the following description, terrestrial reference absolute position (latitude and longitude) is referred to as the absolute position. The AIS information received from the other ship by the AIS receiver 22 is outputted to the other-ship information memory 37.

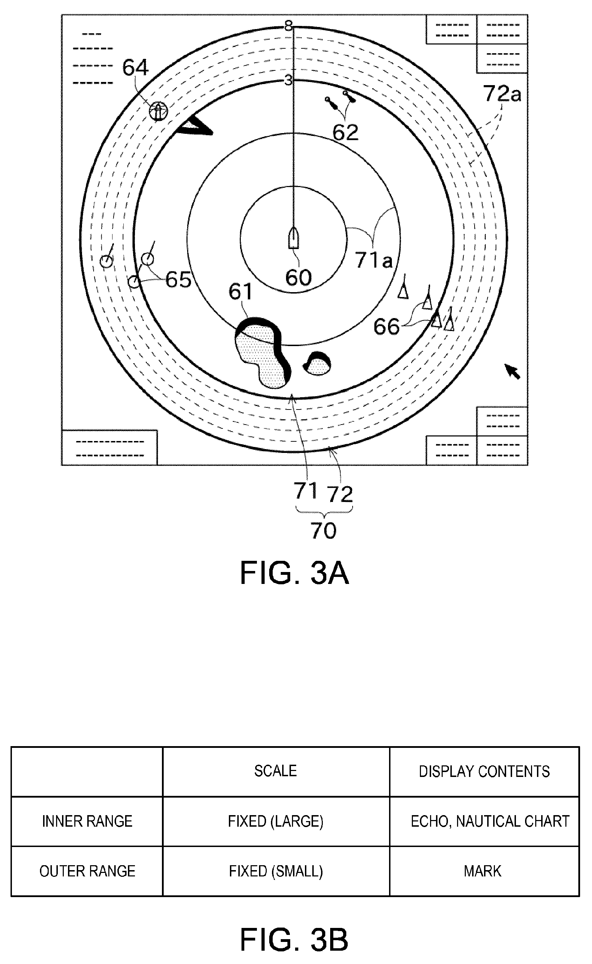

The other-ship information memory 37 stores the AIS information and the TT information obtained as above. The controller 34 acquires the AIS information and the TT information from the other-ship information memory 37 and displays them on the display unit 35 (see TT symbols 65 and AIS symbols 66 in Fig. 3A). Note that, although only the absolute position of the other ship is contained in the AIS signal, the controller 34 calculates a relative position of the other ship indicated by the AIS signal, using an absolute position of the ship obtained from the GPS receiver 21.

The nautical chart information memory 38 stores an electronic nautical chart. The electronic nautical chart contains, in addition to a position of land, information required for navigation, specifically, a landmark, a water depth, a water bottom sediment type, a coast form, a sea bottom hazardous object, etc. A landmark serves as a reference mark used when the ship is in move. Specific examples of the landmark during navigation include a beacon, a port, a mountain, a land, and a course buoy. Note that, the concept of the landmark of this embodiment includes marks and symbols arranged on the ground, and also, marks and symbols arranged in the sea (e.g., the course buoy). The controller 34 displays landforms and the landmarks around the ship on the display unit 35 (see lands, buoy symbols 62, and a beacon symbol 63 in Fig. 2A).

Note that, the "map" in this specification indicates a view showing a part of/whole earth (earth ground) in a shrank manner, in addition to a general view mainly showing lands. Therefore, the "map" in this specification includes an aeronautical chart showing traveling information of airplanes, a nautical chart showing traveling information of ships. Among the examples of the map, in this embodiment, the nautical chart is used.

The display condition memory 39 stores display conditions. The display conditions are set to prevent an excessive number of marks and symbols from being arranged in the second range 72 and causing difficulty in discriminating one from another, and only the display target satisfying the conditions is displayed within the second range 72. In this embodiment, the display conditions are only set for the second range 72; however, the same display conditions as or different display conditions from the second range 72 may be set for the first range 71.

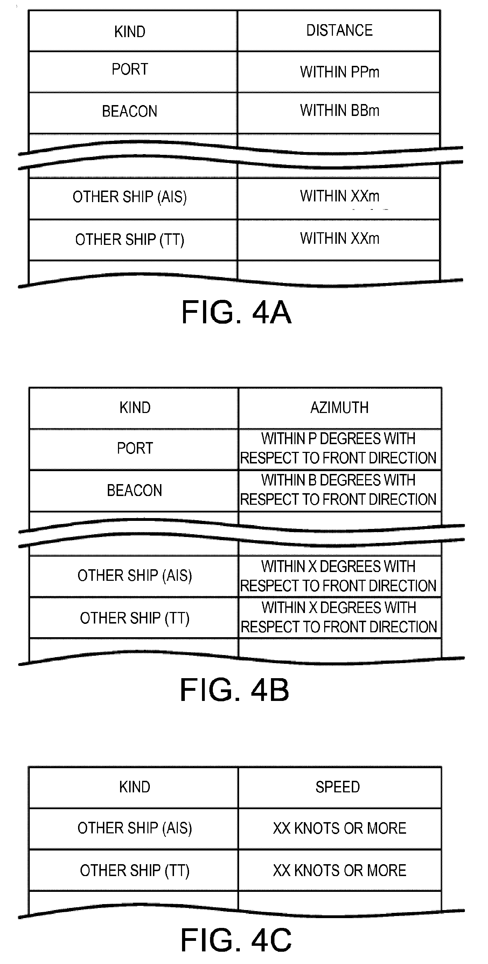

Figs. 4A to 4C show examples of such display conditions, respectively. In these examples, the display conditions include "distance", "azimuth", and "speed."

The "distance" is an item for determining whether to display a display target, according to the distance thereof from the ship. Moreover, different values may be set as the distance depending on the kind of the display target. In this manner, for example, it becomes possible not to display other ships in the far distance within the second range 72, while displaying a port in the far distance within the second range 72. Moreover, the distance may be automatically changed corresponding to the scale of the second range 72.

The "azimuth" is an item for determining whether to display a display target according to the direction to which the target is directed. Moreover, different values may be set as the azimuth depending on the kind of the display target. In this manner, for example, it becomes possible to display other ships even if they are positioned rearward of the ship, while not displaying a port positioned rearward of the ship.

The "speed" is an item for determining whether to display other ships according to the speed thereof. In this manner, for example, it becomes possible to only display the ship to be observed by displaying the ship traveling in high speed. Note that, the values of the "distance", "azimuth", and "speed" can be changed by the user. Moreover, the display conditions can be arbitrarily set without being limited to the examples described above.

As described above, the controller 34 acquires perimeter information of the ship from the sweep memory 31, the other-ship information memory 37, and the nautical chart information memory 38, and displays the acquired perimeter information on the display unit 35 while changing the scales of the first and second ranges 71 and 72 as described above, respectively.

Moreover, the user can set a display mode of the display area 70 and contents to be displayed (display contents) within the display area 70 by controlling a component configuring the user interface 36 (e.g., a trackball, keys, or a keyboard).

In the setting of the display mode, the user can change the scales of the first and second ranges 71 and 72, respectively, by inputting the scale after calling a predetermined menu display screen. Additionally, the user can suitably change the position of the border between the first and second ranges 71 and 72 by dragging, etc.

In the setting of the display mode, the user can set which perimeter information to display within the first range 71 and the second range 72 individually. Additionally, the user can set to display ships as the echoes 61, the TT symbols 65, or the AIS symbols 66, or both the TT and AIS symbols 65 and 66 by superimposing onto each other.

In the example shown in Figs. 2A and 2B, it is set to display echoes and the nautical chart within both the first and second ranges 71 and 72, and to display the ships as the echoes 61. Note that, since landforms and the echoes 61 are information of which the size changes according to the scale, displayed shapes thereof are different between the first and second ranges 71 and 72. Specifically, the landforms and the echoes 61 to be displayed within the second range 72 are compressed in the radial direction to be displayed, compared to the landforms and the echoes 61 within the first range 71.

Figs. 3A and 3B are a view and a table showing a display screen when the display contents are changed, respectively. In the example shown in Figs. 3A and 3B, it is set to display marks within the second range 72 while displaying the echoes and the nautical chart within the first range 71, and to display the ships as the TT symbols 65 or the AIS symbols 66. Therefore, in the example shown in Figs. 3A and 3B, a beacon mark 64 serving as the mark indicating the position of the beacon is displayed instead of the beacon symbol 63 in the nautical chart. Note that, in the example shown in Figs. 3A and 3B, the nautical chart may also be displayed within the second range 72.

As described above, the radar indicator 12 includes the display unit 35 and the controller 34. The display unit 35 displays, on the display screen, the first range 71, and the second range 72 arranged to surround the first range 71. The controller 34 sets different scales for the first and second ranges 71 and 72, and performs a control to display the perimeter information within the first and second ranges 71 and 72 at positions corresponding to the perimeter information. Note that, in this embodiment, the first and second ranges 71 and 72 respectively have fixed ranges, and the scale of the first range 71 is larger than that of the second range 72.

In this manner, since the scales are fixed, the position of the perimeter information can instinctively be grasped. Moreover, since the scale of the first range 71 is larger than that of the second range 72, the perimeter information of the range far from the ship can be displayed at some standard level while displaying the perimeter information of the range close to the ship in detail.

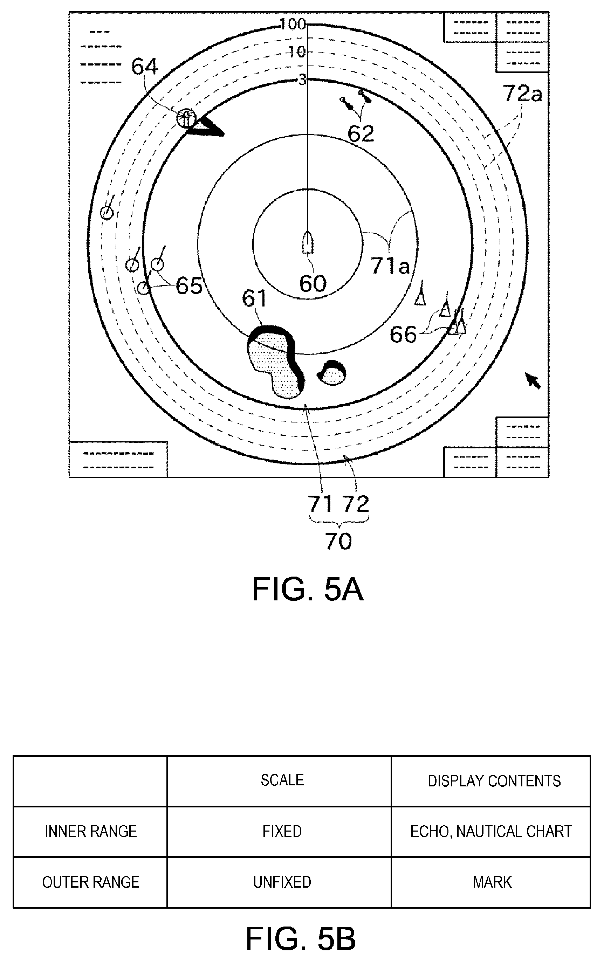

Next, a first modification of the above embodiment is described. Figs. 5A and 5B are a view and a table showing the display screen displayed on the display screen according to the first modification, respectively. Note that, the components same as or similar to the above embodiment are denoted with the same reference numerals in the description and drawings, and the description thereof may be omitted.

In the first modification, the scale of the second range 72 is not fixed and changes. Specifically, the scale of the second range 72 is reduced as the range therein is distant from the first range 71. In the first modification, the change of the scale is set using a logarithmic function. Therefore, in the first modification, the outline frame of the second range 72 indicates the distance of 100km from the ship, while a middle part of the second range 72 indicates the distance of 10km from the ship. Note that, in the first modification, if the range ring 72a is drawn for every predetermined distance as the above embodiment, multiple lines overlap with each other and the visibility degrades. Therefore, the range ring 72a is drawn so that each space between the adjacent range rings 72a on the display screen is fixed.

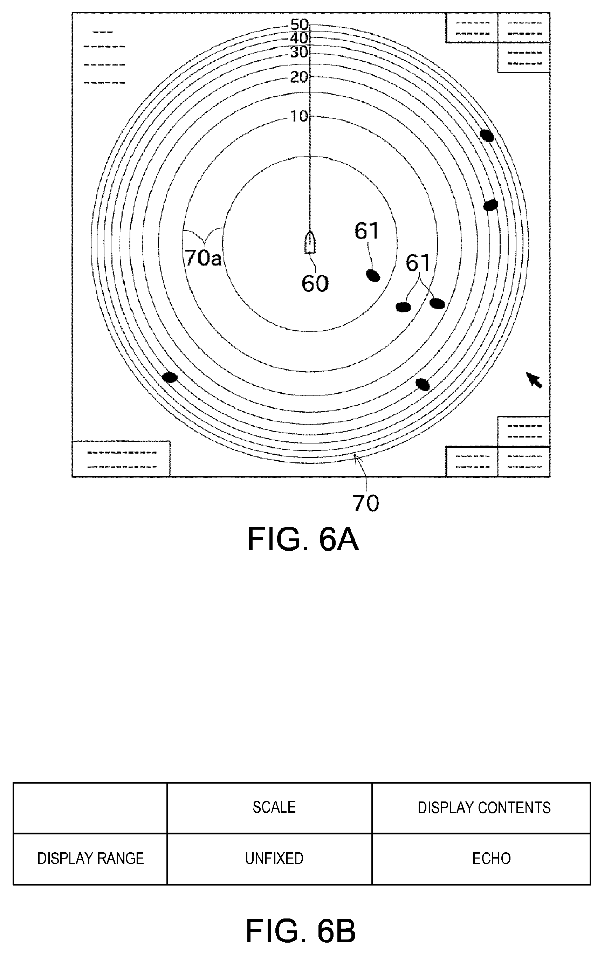

Next, a second modification of the above embodiment representing background art is described. Figs. 6A and 6B are a view and a table showing the display screen displayed on the display unit according to the second modification, respectively.

In the second modification, the display area 70 is not divided into the first and second ranges 71 and 72. The scale of the display area 70 is not fixed, and is set to be reduced as the range goes outward from the center of the display screen (i.e., the ship position). Also in this case, the change of the scale may be set using a logarithmic function, similar to the first modification.

Note that, in the second modification, unlike the first modification, a range ring 70a is drawn for every predetermined distance (5km). Therefore, in the outer range with small scale, the space between adjacent range rings 70a becomes shorter.

Moreover, in the above embodiment, the echoes 61 compressed in the distance direction are displayed (Fig. 2A). However, when the similar method is applied to the second modification, since the scale of the outer range in the second modification is quite small, the echoes 61 are significantly compressed in the distance direction, and may be overlooked. Therefore, in the second modification, enlarge processing of the echoes 61 is performed so that the echoes 61 are displayed in the same size regardless of the scale.

As above, the suitable embodiment and the modifications of the present invention are described. The above configuration may be modified as follows.

The method of varying the display mode between the first and second ranges 71 and 72 is not limited to the above, and for example, the perimeter information (e.g., the echo 61 and the beacon mark 64) displayed within the second range 72 may be displayed in a light color (tint color). Additionally, backgrounds of the first and second ranges 71 and 72 may be set to have different colors or brightness therebetween.

The display area 70 is not limited to a circular shape and may be a rectangular shape, for example. In this case, the first and the second ranges 71 and 72 may also have a rectangular shape. Additionally, shapes of the first and second ranges 71 and 72 can arbitrarily be changed (e.g., arranging the rectangular second range 72 around the circular first range 71).

In the above embodiment, the center of the display screen matches with the ship position; however, they may not be in match. For example, the ship position may be set slightly below the center of the display screen so as to display the forward range of the ship more in detail than the rearward range of the ship.

The scale of the first range 71 may be smaller than that of the second range 72. Additionally, the scale of the first range 71 may not be fixed. Moreover, for the changes of the scales of the first and second ranges 71 and 72, they are not limited to using the logarithmic function and any suitable function or the like may be used.

The perimeter information may be a user-registered position. The user-registered position is a position registered by the user (e.g., a position where a great amount of fish has been caught). The user can register, for example, the current position of the ship as the user-registered position by controlling the user interface 36. When the controller 34 receives an instruction to create the user-registered position, the controller 34 stores a current ship absolute position acquired by the GPS receiver 21 and an icon of the user-registered position. The controller 34 displays the icon within the first range 71 or the second range 72.

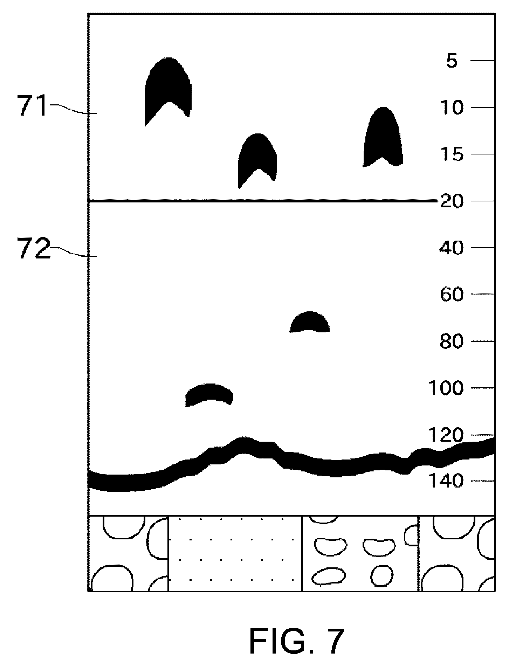

The present invention is not limited to the ship radar apparatus, but may be a radar apparatus installed in, for example, a beacon and for monitoring a position and the like of a moving body. Moreover, other than such a radar apparatus, it may be applied to other ship instruments, such as a plotting device, a scanning sonar, and a fish finder. Note that, fish finders generally display a display screen of which the vertical axis indicates water depth and the horizontal axis indicates time, and the present invention may also be applied to such display screen. Specifically, the fish finder applied with the present invention displays, for example, a display screen shown in Fig. 7. In Fig. 7, the first range 71 is set to be from the sea surface to the water depth of 20m, and the second range 72 is set to be the deeper range thereof. The scale is different between the first and second ranges 71 and 72. Thus, the fish finer applied with the present invention can display a predetermined range (e.g., near the sea bottom or the water depth range where desired fish exists) in a normal scale, and display other range in a compressed manner.

The movable body equipped therein with the information display device is not limited to the ship, and for example, it may be an airplane or automobile. For example, when the device is equipped in an automobile, similar to the above embodiment, the method of displaying a target object in the horizontal surface along with the automobile equipped with the device may be used. Moreover, when the device is equipped in an airplane, a method of displaying the target object within the forward range of the airplane equipped with the device such that the vertical axis indicates altitude and the horizontal axis indicates distance may also be used other than the display method of the above embodiment. Note that, in this display method, the vertical and horizontal axes both indicate distance information (information containing not only the distance from a predetermined position, but also water depth and altitude). Therefore, in this display method, the first and second ranges may be set by determining the border in either one of the vertical axis (altitude) and the horizontal axis (distance). For example, when the border is set in the vertical axis, the range may be divided to a range above a predetermined altitude and a range below the predetermined altitude. On the other hand, when the border is set in the horizontal axis, the range may be divided to a range above a predetermined distance and a range below the predetermined distance.

As described in the above example, in the information display device, as long as the distance information is indicated in one of the coordinate axes, arbitrary information may be displayed in the other coordinate axis. Moreover, the information display device is not limited to displaying the information two-dimensionally, and may have a configuration to display the information three-dimensionally (a configuration with three coordinate axes, for example, the configuration of displaying the altitude (water depth) in addition to the azimuth).

## Claims

1. An information display device (12) for a movable body (60), comprising:
a display unit (35) for displaying, on a display screen, a first range (71) and a second range (72) having a display reference position same as that of the first range (71) and being adjacent to the first range (71) in a display area (70), wherein the first range (71) and the second range (72) indicate a first range of near distances from the display reference position and a second range of far distances from the display reference position, the display reference position representing the position of the movable body (60), and
a controller (34) for setting different scales within the first range (71) and the second range (72) and performing a control to display perimeter information of the movable body (60) at a position in the display area (70) which corresponds to a position of the perimeter information, wherein the perimeter information is information about the objects around the movable body (60), and wherein the scale within the first range (71) is constant, and wherein at least in the second range (72) the controller (34) determines whether to display the perimeter information based on predetermined display conditions, such that at least in the second range (72) display of an excessive number of the perimeter information is prevented.

2. The device (12) of Claim 1, wherein the predetermined display conditions are set individually for the first and the second range (71, 72).

3. The device (12) of Claim 2, wherein first range rings (71 a) in the first range (71) differ from second range rings (72a) in the second range (72).

4. The device (12) of any one of Claims 1 to 3, wherein the scales of the first and second ranges (71, 72) are fixed, respectively.

5. The device (12) of any one of Claims 1 to 4, wherein the scale of the first range (71) is larger than the scale of the second range (72).

6. The device (12) of any one of Claims 1 to 3, wherein the scale of the first range (71) is fixed, and
wherein the scale of the second range (72) is set smaller as it locates more distant from the display reference position.

7. The device (12) of Claim 5 or 6, wherein the perimeter information includes information of which a displayed size changes according to the scale, and when this information is displayed within the second range (72), the information is displayed in an enlarged manner.

8. The device (12) of any one of Claims 1 to 7, wherein the controller (34) displays the perimeter information displayed in the second range (72) in a different color than the perimeter information displayed in the first range (71).

9. The device (12) of any one of Claims 1 to 8, wherein the predetermined display conditions in the first range (71) differ from the predetermined display conditions in the second range (72).

10. The device (12) according to Claim 9, wherein the controller (34) sets different predetermined display conditions of at least one of the perimeter information, a line indicating a distance from the movable body (60) or the center of the display screen, and a range outline frame, between the first and second ranges (71, 72).

11. The device (12) of any of Claims 1 to 10, wherein the perimeter information displayed within the first range (71) includes a map, and
wherein the perimeter information displayed within the second range (72) includes at least one of one or more other movable bodies, a landmark serves as a reference mark used when the movable body (60) is in move, and a position registered by a user, and the perimeter information is displayed by a mark.

12. The device (12) of Claim 11, wherein the perimeter information displayed within the second range (72) further includes a map.

13. The device (12) of any one of Claims 1 to 12, wherein the controller is configured to change the different scales according to input scales.

14. A method of displaying information for a movable body (60), comprising:
acquiring perimeter information of the movable body (60), wherein perimeter information is information about objects around the movable body (60);
setting different scales for a first range (71) arranged on a display screen of a display unit (35) and a second range (72) arranged on the display screen, having a display reference position same as that of the first range (71) and being adjacent to the first range (71) in a display area (70), wherein the first range (71) and the second range (72) indicate a first range of near distances from the display reference position and a second range of far distances from the display reference position, the display reference position representing the position of the movable body (60), and wherein the scale within the first range (71) is set to be constant; and
displaying the perimeter information at a position in the display area (70) which corresponds to a position of the perimeter information, determining at least in the second range (72) whether to display the perimeter information based on predetermined display conditions, such that at least in the second range (72) display of an excessive number of the perimeter information is prevented.

## Patentansprüche

1. Informationsanzeigevorrichtung (12) für einen beweglichen Körper (60), mit:
einer Anzeigeeinheit (35), um auf einem Anzeigeschirm einen ersten Bereich (71) und einen zweiten Bereich (72) anzuzeigen, der eine gleiche Anzeigereferenzposition wie jene des ersten Bereichs (71) hat und dem ersten Bereich (71) in einer Anzeigefläche (70) benachbart ist, wobei der erste Bereich (71) und der zweite Bereich (72) einen ersten Bereich von Nahdistanzen von der Anzeigereferenzposition und einen zweiten Bereich von Ferndistanzen von der Anzeigereferenzposition anzeigen, wobei die Anzeigereferenzposition die Position des beweglichen Körpers (60) repräsentiert, und
einem Controller (34), um verschiedene Skalen innerhalb des ersten Bereichs (71) und des zweiten Bereichs (72) einzustellen und eine Steuerung durchzuführen, um Umkreisinformation des beweglichen Körpers (60) an einer Position in der Anzeigefläche (70) anzuzeigen, welche einer Position der Umkreisinformation entspricht, wobei die Umkreisinformation eine Information über die Objekte um den beweglichen Körper (60) ist, und wobei die Skala innerhalb des ersten Bereichs (71) konstant ist, und wobei zumindest im zweiten Bereich (72) der Controller (34) bestimmt, ob die Umkreisinformation anzuzeigen ist, basierend auf vorbestimmten Anzeigebedingungen, so dass zumindest in dem zweiten Bereich (72) eine Anzeige einer übermäßigen Anzahl der Umkreisinformationen verhindert wird.

2. Vorrichtung (12) nach Anspruch 1, wobei die vorbestimmten Anzeigebedingungen für den ersten und den zweiten Bereich (71, 72) individuell eingestellt werden.

3. Vorrichtung (12) nach Anspruch 2, wobei erste Bereichsringe (71a) in dem ersten Bereich (71) sich von zweiten Bereichsringen (72a) in dem zweiten Bereich (72) unterscheiden.

4. Vorrichtung (12) nach einem der Ansprüche 1 bis 3, wobei die Skalen der ersten und zweiten Bereiche (71, 72) jeweils fixiert sind.

5. Vorrichtung (12) nach einem der Ansprüche 1 bis 4, wobei die Skala des ersten Bereichs (71) größer als die Skala des zweiten Bereichs (72) ist.

6. Vorrichtung (12) nach einem der Ansprüche 1 bis 3, wobei die Skala des ersten Bereichs (71) fixiert ist, und
wobei die Skala des zweiten Bereichs (72) kleiner eingestellt ist, da er von der Anzeigereferenzposition entfernter gelegen ist.

7. Vorrichtung (12) nach Anspruch 5 oder 6, wobei die Umkreisinformation Information enthält, deren angezeigte Größe sich gemäß der Skala ändert, und, wenn diese Information innerhalb des zweiten Bereichs (72) angezeigt wird, die Information in vergrößerter Art und Weise angezeigt wird.

8. Vorrichtung (12) nach einem der Ansprüche 1 bis 7, wobei der Controller (34) die im zweiten Bereich (72) angezeigte Umkreisinformation in einer anderen Farbe als die im ersten Bereich (71) angezeigte Umkreisinformation anzeigt.

9. Vorrichtung (12) nach einem der Ansprüche 1 bis 8, wobei die vorbestimmten Anzeigebedingungen in dem ersten Bereich (71) sich von den vorbestimmten Anzeigebedingungen in dem zweiten Bereich (72) unterscheiden.

10. Vorrichtung (12) nach Anspruch 9, wobei der Controller (34) verschiedene vorbestimmte Anzeigebedingungen von zumindest einer der Umkreisinformation, einer eine Distanz von dem beweglichen Körper (60) oder der Mitte des Anzeigeschirms anzeigenden Linie und einer Bereichsumrandung zwischen dem ersten und zweiten Bereich (71, 72) einstellt.

11. Vorrichtung (12) nach einem der Ansprüche 1 bis 10, wobei die Umkreisinformation, die innerhalb des ersten Bereichs (71) angezeigt wird, eine Karte einschließt und
wobei die Umkreisinformation, die innerhalb des zweiten Bereichs (72) angezeigt wird, zumindest eine eines oder mehrerer anderer beweglicher Körper, eines Orientierungspunktes, der als eine Referenzmarkierung dient, die genutzt wird, wenn der bewegliche Körper (60) in Bewegung ist, und einer von einem Nutzer registrierten Position einschließt und die Umkreisinformation durch eine Markierung angezeigt wird.

12. Vorrichtung (12) nach Anspruch 11, wobei die innerhalb des zweiten Bereichs (72) angezeigte Umkreisinformation ferner eine Karte einschließt.

13. Vorrichtung (12) nach einem der Ansprüche 1 bis 12, wobei der Controller dafür eingerichtet ist, die verschiedenen Skalen gemäß Eingabeskalen zu ändern.

14. Verfahren zum Anzeigen von Information für einen beweglichen Körper (60), mit den Schritten:
Erfassen einer Umkreisinformation des beweglichen Körpers (60), wobei eine Umkreisinformation eine Information über Objekte um den beweglichen Körper (60) ist;
Einstellen verschiedener Skalen für einen ersten Bereich (71), der auf einem Anzeigeschirm einer Anzeigeeinheit (35) angeordnet ist, und einen auf dem Anzeigeschirm angeordneten zweiten Bereich (72), der eine gleiche Anzeigereferenzposition wie jene des ersten Bereichs (71) hat und dem ersten Bereich (71) in einer Anzeigefläche (70) benachbart ist, wobei der erste Bereich (71) und der zweite Bereich (72) einen ersten Bereich von Nahdistanzen von der Anzeigereferenzposition und einen zweiten Bereich von Ferndistanzen von der Anzeigereferenzposition anzeigen, wobei die Anzeigereferenzposition die Position des beweglichen Körpers (60) repräsentiert, und wobei die Skala innerhalb des ersten Bereichs (71) konstant eingestellt ist; und
Anzeigen der Umkreisinformation an einer Position in der Anzeigefläche (70), welche einer Position der Umkreisinformation entspricht, wobei zumindest in dem zweiten Bereich (72) bestimmt wird, ob die Umkreisinformation anzuzeigen ist, basierend auf vorbestimmten Anzeigebedingungen, so dass zumindest im zweiten Bereich (72) eine Anzeige einer übermäßigen Anzahl der Umkreisinformationen verhindert wird.

## Revendications

1. Dispositif d'affichage d'informations (12) pour un corps mobile (60), comprenant :
une unité d'affichage (35) pour afficher sur un écran d'affichage une première portée (71) et une seconde portée (72) qui présente une position de référence d'affichage identique à celle de la première portée (71) et qui est voisine de la première portée (71) dans une zone d'affichage (70), étant précisé que la première portée (71) et la seconde portée (72) indiquent une première portée de distances proches de la position de référence d'affichage, et une seconde portée de distances éloignées de la position de référence d'affichage, la position de référence d'affichage représentant la position du corps mobile (60), et
un régulateur (34) pour régler différentes échelles à l'intérieur de la première portée (71) et de la seconde portée (72) et pour effectuer une régulation afin d'afficher des informations périmétriques du corps mobile (60) à une position dans la zone d'affichage (70) qui correspond à une position des informations périmétriques, étant précisé que les informations périmétriques sont des informations sur les objets situés autour du corps mobile (60), que l'échelle à l'intérieur de la première portée (71) est constante, et qu'au moins dans la seconde portée (72), le régulateur (34) détermine s'il faut afficher les informations périmétriques sur la base de conditions d'affichage prédéterminées, de telle sorte qu'au moins dans ladite seconde portée (72), l'affichage d'un nombre excessif d'informations périmétriques est empêché.

2. Dispositif (12) de la revendication 1, étant précisé que les conditions d'affichage prédéterminées sont réglées individuellement pour les première et seconde portées (71, 72).

3. Dispositif (12) de la revendication 2, étant précisé que des premières couronnes de portée (71a) dans la première portée (71) sont différentes de secondes couronnes de portée (72a) dans la seconde portée (72).

4. Dispositif (12) de l'une quelconque des revendications 1 à 3, étant précisé que les échelles des première et seconde portées (71, 72) sont fixées respectivement.

5. Dispositif (12) de l'une quelconque des revendications 1 à 4, étant précisé que l'échelle de la première portée (71) est plus grande que l'échelle de la seconde portée (72).

6. Dispositif (12) de l'une quelconque des revendications 1 à 3, étant précisé que l'échelle de la première portée (71) est fixe, et
que l'échelle de la seconde portée (72) est plus petite quand elle est plus éloignée de la position de référence d'affichage.

7. Dispositif (12) de la revendication 5 ou 6, étant précisé que les informations périmétriques contiennent des informations dont une taille affichée change suivant l'échelle, et que quand ces informations sont affichées à l'intérieur de la seconde portée (72), les informations sont affichées en plus grand.

8. Dispositif (12) de l'une quelconque des revendications 1 à 7, étant précisé que le régulateur (34) affiche les informations périmétriques affichées dans la seconde portée (72) dans une couleur différente des informations périmétriques affichées dans la première portée (71).

9. Dispositif (12) de l'une quelconque des revendications 1 à 8, étant précisé que les conditions d'affichage prédéterminées, dans la première portée (71), sont différentes des conditions d'affichage prédéterminées, dans la seconde portée (72).

10. Dispositif (12) de la revendication 9, étant précisé que le régulateur (34) règle différentes conditions d'affichage prédéterminées de l'une au moins des informations périmétriques, une ligne indiquant une distance à partir du corps mobile (60) ou du centre de l'écran d'affichage, et une trame de contour de portée, entre les première et seconde portées (71, 72).

11. Dispositif (12) de l'une quelconque des revendications 1 à 10, étant précisé que les informations périmétriques affichées à l'intérieur de la première portée (71) contiennent une carte, et
que les informations périmétriques affichées à l'intérieur de la seconde portée (72) contiennent au moins un ou plusieurs autres corps mobiles, un point de repère sert de marque de référence utilisée quand le corps mobile (60) est en mouvement, et une position enregistrée par un utilisateur, et les informations périmétriques sont affichées par une marque.

12. Dispositif (12) de la revendication 11, étant précisé que les informations périmétriques affichées à l'intérieur de la seconde portée (72) contiennent également une carte.

13. Dispositif (12) de l'une quelconque des revendications 1 à 12, étant précisé que le régulateur est conçu pour modifier les différentes échelles suivant les échelles entrées.

14. Procédé d'affichage d'informations pour un corps mobile (60), comprenant :
l'acquisition d'informations périmétriques du corps mobile (60), étant précisé que les informations périmétriques sont des informations sur des objets situés autour du corps mobile (60) ;
le réglage de différentes échelles pour une première portée (71) disposée sur un écran d'affichage d'une unité d'affichage (35) et pour une seconde portée (72) disposée sur l'écran d'affichage, qui présente une position de référence d'affichage identique à celle de la première portée (71) et qui est voisine de la première portée (71) dans une zone d'affichage (70), étant précisé que la première portée (71) et la seconde portée (72) indiquent une première portée de distances proches de la position de référence d'affichage, et une seconde portée de distances éloignées de la position de référence d'affichage, la position de référence d'affichage représentant la position du corps mobile (60), et que l'échelle à l'intérieur de la première portée (71) est réglée pour être constante ; et
l'affichage des informations périmétriques à une position dans la zone d'affichage (70) qui correspond à une position des informations périmétriques, en déterminant au moins dans la seconde portée (72) s'il faut afficher les informations périmétriques sur la base de conditions d'affichage prédéterminées, de telle sorte qu'au moins dans ladite seconde portée (72), l'affichage d'un nombre excessif d'informations périmétriques est empêché.
